# EUROPÄISCHE PATENTSCHRIFT

(11) **EP 3 344 541 B1**
(45) Veröffentlichungstag und Bekanntmachung des Hinweises auf die Patenterteilung: **24.06.2020**
(21) Anmeldenummer: 16758153.7
(22) Anmeldetag: 29.08.2016
(51) Int. Cl.: B64D 11/06, B60N 2/30, B60N 2/75

(54) **FLUGZEUGSITZVORRICHTUNG MIT KLAPPBAREM FLUGZEUGSITZ**
AIRPLANE SEAT DEVICE WITH FOLDABLE AIRPLANE SEAT
DISPOSITIF SIÈGE D'AÉRONEF COMPRENANT UN SIÈGE D'AÉRONEF RABATTABLE

(30) Priorität: 03.09.2015 DE 102015114762
(43) Veröffentlichungstag der Anmeldung: 11.07.2018
(73) Patentinhaber: Recaro Aircraft Seating GmbH & Co. KG, 74523 Schwäbisch Hall (DE)
(72) Erfinder: ITZINGER, Andreas, 74545 Michelfeld (DE); BAUMANN, Jürgen, 78351 Bodman-Ludwigshafen (DE)
(74) Vertreter: Daub, Thomas
(86) Internationale Anmeldenummer: PCT/EP2016/070313
(87) Internationale Veröffentlichungsnummer: WO 2017/037017

(56) Entgegenhaltungen:
- EP-A1- 1 645 507
- DE-A1-102009 004 987
- DE-A1-102012 014 619
- US-A- 4 005 902
- US-A1- 2009 283 636
- US-A1- 2010 218 225
- US-A1- 2014 306 061

## Beschreibung

### Stand der Technik

Die Erfindung betrifft eine Flugzeugsitzvorrichtung nach dem Oberbegriff des Patentanspruchs 1.

Es ist bereits eine Flugzeugsitzvorrichtung mit wenigstens einem Flugzeugsitz, der zumindest dazu vorgesehen ist, zwischen einer Gebrauchsstellung und einer Verstaustellung verstellt zu werden, vorgeschlagen worden.

Die Aufgabe der Erfindung besteht insbesondere darin, eine gattungsgemäße Vorrichtung mit verbesserten Eigenschaften hinsichtlich einer Variabilität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung mit wenigstens einem Flugzeugsitz, der zumindest dazu vorgesehen ist, zwischen einer Gebrauchsstellung und einer Verstaustellung verstellt zu werden, und wenigstens eine Rückenlehne und wenigstens einen Verstellmechanismus aufweist, wobei die Rückenlehne bei einer Verstellung zwischen der Gebrauchsstellung und der Verstaustellung des Flugzeugsitzes mittels des Verstellmechanismus zumindest teilweise verstellt wird.

Es wird vorgeschlagen, dass der Flugzeugsitz in der Verstaustellung eine maximale Höhe aufweist, die kleiner ist als eine maximale Höhe in der Gebrauchsstellung. Unter einem "Flugzeugsitz" soll dabei insbesondere ein Sitz verstanden werden, der dazu vorgesehen ist, in einer Flugzeugkabine eines Flugzeugs aufgeständert zu werden. Dabei weist der Flugzeugsitz vorzugsweise eine Aufständereinheit auf, mittels der der Flugzeugsitz auf einem Kabinenboden der Flugzeugkabine fest aufständerbar ist. Dabei ist der Flugzeugsitz vorzugsweise als ein Teil einer Sitzreihe ausgebildet, die mehrere, im Wesentlichen gleich ausgebildete Flugzeugsitze aufweist, die über eine gemeinsame Aufständereinheit auf dem Kabinenboden aufgeständert sind. Der Flugzeugsitz weist vorzugsweise einen Sitzboden, eine mit dem Sitzboden gekoppelte Rückenlehne, wenigstens einen Sitzteiler und wenigstens eine Armlehne auf. Unter einem "Sitzboden" soll dabei insbesondere eine Einheit verstanden werden, die den Sitzbereich für einen Passagier ausbildet, wobei der Sitzboden dabei vorzugsweise von einem Grundkörper und einem auf dem Grundkörper angebrachten Polster gebildet ist. Unter einem "Sitzbereich" soll dabei insbesondere ein Bereich des Flugzeugsitzes verstanden werden, der dazu vorgesehen ist, dass ein Passagier, insbesondere während eines Flugs, darauf sitzt. Unter einer "Rückenlehne" soll dabei insbesondere eine Einheit des Flugzeugsitzes verstanden werden, die eine Rückenlehnenauflagefläche ausbildet, an der ein auf dem Flugzeugsitz sitzender Passagier seinen Rücken anlehnen kann. Dabei umfasst die Rückenlehne vorzugsweise zumindest einen Grundkörper und ein Polster, welches die Rückenlehnenauflagefläche ausbildet. Die Rückenlehne ist dabei an einem hinteren Ende des Sitzbodens angeordnet und erstreckt sich von dem Sitzboden nach oben, von einer Aufständereinheit weg. Unter einer "Armlehne" soll dabei insbesondere eine Einheit verstanden werden, die wenigstens eine Auflagefläche ausbildet, auf der ein auf dem Flugzeugsitz sitzender Passagier seinen Arm zumindest teilweise ablegen kann. Zur Ausbildung der wenigstens einen Auflagefläche weist die Armlehneneinheit dabei wenigstens ein Auflageelement auf. Die Armlehne begrenzt dabei den Sitzbereich des Flugzeugsitzes seitlich. Unter einem "Sitzteiler" soll insbesondere ein Bauteil des Flugzeugsitzes oder einer Sitzreihe mit zumindest zwei seitlich nebeneinander angeordneten Flugzeugsitzen verstanden werden, das bezüglich einer vertikal zu einer Aufständerebene des Flugzeugsitzes ausgerichteten Vertikalrichtung zumindest in der Gebrauchsstellung zumindest im Wesentlichen oberhalb zumindest einer Tragrohrs angeordnet ist. Insbesondere ist der Sitzteiler ein starr ausgebildetes Bauteil der Sitzreihe. Der Sitzteiler ist insbesondere dazu vorgesehen, die Armlehne zu lagern. Vorzugsweise ist der Sitzteiler dazu vorgesehen, eine Gurtanbindung zu ermöglichen. Insbesondere ist der Sitzteiler zu einer Tragrohraufnahme vorgesehen. Vorzugsweise bildet der Sitzteiler eine seitliche Begrenzung zumindest eines von nebeneinander angeordneten Flugzeugsitzen einer Sitzreihe, wobei der Sitzteiler gangseitig und/oder bordseitig angeordnet sein kann, und/oder eine Abgrenzung zwischen zwei seitlich nebeneinander angeordneten Flugzeugsitzen einer Sitzreihe aus. Insbesondere ist der Sitzteiler ein Bestandteil einer Kraftableitung, welche über die Rückenlehneneinheit, den Sitzteiler, eine Tragrohrstruktur und die Aufständereinheit in die Aufständerebene, insbesondere in einen Flugzeugboden, erfolgt. Unter einer "Gebrauchsstellung" soll dabei insbesondere eine Stellung des Flugzeugsitzes verstanden werden, in der er in einer Weise in der Flugzeugkabine aufgeständert ist, in der er ordnungsgemäß von einer Person genutzt werden kann, wobei der Flugzeugsitz insbesondere so aufgebaut ist, dass ein Passagier, insbesondere während eines Flugs, ordnungsgemäß auf dem Flugzeugsitz sitzen kann. Unter einer "Verstaustellung" soll dabei insbesondere eine Stellung des Flugzeugsitzes verstanden werden, in der insbesondere keine Person ordnungsgemäß auf dem Flugzeugsitz sitzen kann, wobei der Flugzeugsitz dabei vorzugsweise möglichst kleine Abmaße aufweist, sodass er in der Verstaustellung besonders platzsparend angeordnet werden kann. Unter einer "maximalen Höhe des Flugzeugsitzes" soll dabei insbesondere eine größte Höhe des Flugzeugsitzes verstanden werden, die er senkrecht, von der Aufständerebene gemessen, aufweist. Dabei ist die maximale Höhe des Flugzeugsitzes in der Gebrauchsstellung vorzugsweise von dem orthogonal zur Aufständerebene gemessenen Abstand gegeben, den die Rückenlehne mit ihrem oberen Ende zu der Aufständerebene aufweist. Eine maximale Höhe in der Gebrauchsstellung des Flugzeugsitzes ist dabei je nach Spezifikation der Flugzeughersteller und/oder Airlines unterschiedlich, beträgt aber vorzugsweise 1,143 m (45 Zoll). Grundsätzlich ist es auch denkbar, dass die maximale Höhe des Flugzeugsitzes unterschiedlich zu den 1,143 m (45 Zoll) ist, d.h. größer oder kleiner ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann ein Flugzeugsitz bzw. eine Sitzreihe bereitgestellt werden, der besonders vorteilhaft zwischen einer Gebrauchsstellung und einer Verstaustellung verstellt werden kann, wobei der Flugzeugsitz insbesondere in der Verstaustellung besonders platzsparend ausgebildet werden kann. Dadurch kann insbesondere eine besonders vorteilhaft flexible Bestuhlung einer Flugzeugkabine bereitgestellt werden, die einfach und schnell auf eine Fluggastanzahl angepasst werden kann, um so eine besonders vorteilhafte Balance zwischen einem größtmöglichem Sitzbereich für einen Fluggast und einer größtmöglichen Anzahl an Flugzeugsitzen, auf denen ein Passagier sitzen kann, zu erreichen.

Zudem wird vorgeschlagen, dass der Flugzeugsitz in der Verstaustellung eine Rückenlehnenhöhe aufweist, die kleiner ist als 1,143 m (45 Zoll). Unter einer "Rückenlehnenhöhe" soll dabei insbesondere eine maximale Höhe der Rückenlehne verstanden werden, wobei die Höhe dabei orthogonal zu der Aufständerebene gemessen wird, auf der der Flugzeugsitz aufgeständert ist. Dabei entspricht die Rückenlehnenhöhe vorzugsweise der maximalen Höhe des Flugzeugsitzes. Dadurch kann der Flugzeugsitz vorteilhaft so ausgebildet werden, dass er auch in der Verstaustellung nicht über andere in Gebrauchsstellung befindliche Flugzeugsitze hinausragt und so beispielsweise eine Sicht innerhalb der Kabine beeinträchtigt.

Es wird weiter vorgeschlagen, dass der Flugzeugsitz in der Verstaustellung eine Gangseitenhöhe aufweist, die kleiner ist als 0,635 m (25 Zoll). Unter einer "Gangseitenhöhe" soll dabei insbesondere eine Höhe des Flugzeugsitzes in einem Gangbereich verstanden werden, der einem Gang der Flugzeugkabine zugewandt ist, wobei der Gangbereich dabei von einem äußeren, dem Gang zugewandten Ende des Flugzeugsitzes, das vorzugsweise von der Armlehne gebildet wird, bis an ein äußeres, dem Gang zugewandtes Ende der Rückenlehne reicht. Dabei weist der Gang oberhalb von 0,635 m (25 Zoll) eine vorgeschriebene obere Gangbreite auf, die größer ist als eine vorgeschriebene untere Gangbreite unterhalb von 0,635 m (25 Zoll), wobei Bauteile oberhalb von 0,635 m (25 Zoll) nicht in den Gangbereich hineinragen dürfen. Bauteile, die in den Gangbereich hineinragen, dürfen nicht höher sein als 0,635 m (25 Zoll). Dadurch kann vorteilhaft ein Flugzeugsitz bereitgestellt werden, der auch in der Verstaustellung in dem Gangbereich eine geringe Höhe aufweist, wodurch insbesondere ein vorteilhaft breiter Gangbereich erreicht werden kann.

Weiterhin wird vorgeschlagen, dass der Flugzeugsitz wenigstens einen Sitzteiler, wenigstens eine Armlehne und/oder wenigstens einen Sitzboden aufweist, wobei der Sitzteiler, die Armlehne und/oder der Sitzboden bei einer Verstellung zwischen der Gebrauchsstellung und der Verstaustellung des Flugzeugsitzes mittels des Verstellmechanismus zumindest teilweise verstellt werden. Unter einem "Verstellmechanismus" soll dabei insbesondere ein Mechanismus verstanden werden, mittels dessen der Flugzeugsitz zumindest zwischen der Gebrauchsstellung und der Verstaustellung verstellt werden kann. Dabei weist der Verstellmechanismus wenigstens eine Lagerstelle, vorzugsweise aber mehrere Lagerstellen auf, mittels denen die verschiedenen Komponenten des Flugzeugsitzes zueinander bewegt, insbesondere zueinander verschwenkt werden können. Dadurch kann der Flugzeugsitz besonders vorteilhaft dazu ausgebildet werden, zwischen einer Gebrauchsstellung und einer Verstaustellung verstellt zu werden. Erfindungsgemäß ist vorgesehen, dass der wenigstens eine Verstellmechanismus die Rückenlehne bei einer Verstellung aus der Gebrauchsstellung in die Verstaustellung im Wesentlichen vertikal nach unten bewegt. Unter einem "im Wesentlichen vertikal nach unten Bewegen" soll dabei insbesondere entlang einer im Wesentlichen orthogonal auf der Aufständerebene stehenden Verschieberichtung in Richtung der Aufständerebene verschieben verstanden werden, wobei die Verschieberichtung dabei um höchstens 30, vorzugsweise um höchstens 15 Grad von einer exakt orthogonal auf der Aufständerebene stehenden Achse abweicht. Dadurch kann der Flugzeugsitz eine besonders vorteilhaft kleine Verstaustellung einnehmen.

Ferner wird vorgeschlagen, dass der Verstellmechanismus an einem hinteren Ende des Sitzteilers wenigstens eine Lagerstelle aufweist, über die der Sitzteiler drehbar mit der Rückenlehne und/oder der Armlehne verbunden ist. Unter einem "hinteren Ende des Sitzteilers" soll dabei insbesondere ein Ende des Sitzteilers, das, in Sitzrichtung gesehen, hinten angeordnet ist, verstanden werden. Dadurch kann der Verstellmechanismus besonders vorteilhaft ausgebildet werden.

Weiter wird vorgeschlagen, dass der Verstellmechanismus an dem unteren Ende der Rückenlehne eine Koppelstelle aufweist, mit der die Rückenlehne in der Gebrauchsstellung mit dem wenigstens einen Sitzteiler gekoppelt ist. Unter einem "unteren Ende der Rückenlehne" soll dabei insbesondere ein in montiertem Zustand der Aufständerebene zugewandtes Ende der Rückenlehne verstanden werden. Dabei ist es denkbar, dass die Koppelstelle in einem unteren Bereich der Rückenlehne angeordnet ist. Dadurch kann die Rückenlehne in der Gebrauchsstellung besonders einfach und sicher drehfest mit dem Sitzteiler gekoppelt werden und so kann ein sicherer Stand des Flugzeugsitzes gewährleistet werden.

Zudem wird vorgeschlagen, dass der Verstellmechanismus wenigstens eine Einzugskinematik aufweist, die dazu vorgesehen ist, die Armlehne bei einer Verstellung in die Verstaustellung einzuklappen. Unter einer "Einzugskinematik" soll dabei insbesondere eine Kinematik verstanden werden, die wenigstens ein Hebelelement umfasst, über das die Armlehne bei einer Verstellung des Flugzeugsitzes von der Gebrauchsstellung in die Verstaustellung automatisch einklappt. Dadurch kann die Armlehne bei einer Verstellung von der Gebrauchsstellung vorteilhaft selbsttätig in eine Verstaustellung gebracht werden, wodurch die Flugzeugsitzvorrichtung besonders vorteilhaft und einfach bedienbar ausgeführt ist.

Es wird weiter vorgeschlagen, dass der wenigstens eine Sitzteiler wenigstens eine als Ausnehmung ausgebildete Koppelstelle aufweist, in die die von der Rückenlehne gebildete Koppelstelle des Verstellmechanismus wenigstens in der Gebrauchsstellung formschlüssig eingreift. Unter einer "Koppelstelle" soll dabei insbesondere eine Stelle verstanden werden, die durch ihre Ausgestaltung, beispielsweise durch Ausgestaltung als eine Mulde, ein Formschlusselement ausbildet und dadurch zu einer formschlüssigen Kopplung mit einem korrespondierend ausgebildeten Element vorgesehen ist. Dadurch kann die Rückenlehne in der Gebrauchsstellung besonders einfach und vorteilhaft arretiert werden.

Weiterhin wird vorgeschlagen, dass der Flugzeugsitz wenigstens einen vorderen Sitzfuß aufweist, der zur Überführung des Flugzeugsitzes in die Verstaustellung dazu vorgesehen ist, aus einer Führungsschiene entkoppelt zu werden. Unter einem "Sitzfuß" soll dabei insbesondere ein Fuß des Flugzeugsitzes verstanden werden, der wenigstens ein Tragrohr der Aufständereinheit des Flugzeugsitzes in einem Gebrauchszustand fest mit dem Kabinenboden koppelt. Vorzugsweise weist der Flugzeugsitz zumindest zwei vordere Sitzfüße auf, wobei Kräfte, die auf den Flugzeugsitz wirken, zumindest teilweise über die zwei Sitzfüße in den Kabinenboden eingeleitet werden. Unter "entkoppelt" soll dabei insbesondere verstanden werden, dass der Sitzfuß von der Führungsschiene gelöst ist und nicht mehr in dieser geführt ist. Grundsätzlich ist es aber auch denkbar, dass ein entkoppelter Sitzfuß nicht aus der Führungsschiene gelöst ist, sondern über eine Kinematik und/oder ein Teleskopgestänge so aus seiner Gebrauchsstellung bewegt ist, dass Kräfte, die auf den Flugzeugsitz wirken, nicht mehr über die Sitzfüße in den Kabinenboden eingeleitet werden können. Dadurch kann der Sitzfuß vorteilhaft von dem Kabinenboden gelöst werden, wodurch der Flugzeugsitz besonders vorteilhaft zusammengeklappt werden kann.

Es wird weiterhin vorgeschlagen, dass der Flugzeugsitz wenigstens einen hinteren Sitzfuß aufweist, der dazu vorgesehen ist, über wenigstens eine Kopplungsstelle mit einer Führungsschiene gekoppelt zu werden. Unter "über wenigstens eine Kopplungsstelle" soll dabei insbesondere verstanden werden, dass an dem Sitzfuß wenigstens eine Kopplungsstelle angebracht ist, die in der Führungsschiene formschlüssig angeordnet ist. Dabei ist die Kopplungsselle vorzugsweise von einem mit dem Sitzfuß verbundenen Fitting gebildet. Dabei ist der hintere Sitzfuß vorzugsweise von zwei hintereinander angeordneten, in dieselbe Führungsschiene eingreifenden, als Fittings ausgebildeten Kopplungsstellen formschlüssig mit der Führungsschiene verbunden. Grundsätzlich ist es auch denkbar, dass der hintere Sitzfuß über eine Kopplungsstelle mit der Führungsschiene verbunden ist, die von einem langen Fitting gebildet ist, das eine Erstreckung in Richtung der Führungsschiene aufweist, die größer ist als die Erstreckung eines normalen Fittings. Dadurch kann der hintere Sitzfuß besonders stabil und sicher mit dem Kabinenboden gekoppelt werden und insbesondere in der Verstaustellung des Flugzeugsitzes einen sicheren Stand des Flugzeugsitzes garantieren.

Ferner wird vorgeschlagen, dass der Verstellmechanismus im Bereich einer hinteren Tragrohranbindung des Sitzteilers eine Lagerstelle ausbildet, über die der Sitzteiler schwenkbar mit dem hinteren Sitzfuß gekoppelt ist. Unter einer "Lagerstelle" soll dabei insbesondere eine Stelle verstanden werden, über die zwei Elemente, insbesondere der Sitzteiler und ein Sitzfuß, über ein entsprechendes Lagerelement über eine Gleit- oder Wälzlagerung insbesondere rotatorisch zueinander gelagert sind. Dadurch kann der Verstellmechanismus besonders vorteilhaft ausgebildet werden und der Flugzeugsitz bei einer Verstellung zwischen der Gebrauchsstellung und der Verstaustellung besonders vorteilhaft bewegt werden.

Zudem wird vorgeschlagen, dass die Flugzeugsitzvorrichtung wenigstens einen weiteren Flugzeugsitz aufweist, der mit dem Flugzeugsitz eine Sitzreihe ausbildet. Unter einem "weiteren Flugzeugsitz" soll dabei insbesondere ein Flugzeugsitz verstanden werden, der im Wesentlichen identisch zu dem einen ersten Flugzeugsitz ausgebildet ist, wobei der weitere Flugzeugsitz dabei neben dem ersten Flugzeugsitz angeordnet ist und zusammen mit dem einen Flugzeugsitz zumindest einen Teil der Sitzreihe ausbildet. Vorzugsweise weist die Flugzeugsitzvorrichtung einen weiteren, dritten Flugzeugsitz auf, der ebenfalls im Wesentlichen identisch zu den beiden anderen Flugzeugsitzen ausgebildet ist, wobei alle drei Flugzeugsitze zusammen die Sitzreihe ausbilden. Dabei weisen die drei Flugzeugsitze, die die Sitzreihe ausbilden, gemeinsame Bauteile auf, wie insbesondere Tragrohre und/oder Sitzteiler. Dadurch kann die Flugzeugsitzvorrichtung besonders vorteilhaft Sitzreihen bereitstellen, die zwischen der Gebrauchsstellung und der Verstaustellung verstellbar sind.

Ferner wird vorgeschlagen, dass die zumindest zwei Flugzeugsitze einer Sitzreihe gemeinsam zwischen der Gebrauchsstellung und der Verstaustellung verstellbar sind. Unter "gemeinsam verstellbar" soll dabei insbesondere verstanden werden, dass durch die Verstellung des einen Flugzeugsitzes zwischen der Gebrauchsstellung und der Verstaustellung automatisch alle weiteren Flugzeugsitze der Sitzreihe entsprechend mit verstellt werden. Dadurch kann eine besonders einfach zu verstellende Sitzreihe mit mehreren Flugzeugsitzen bereitgestellt werden.

Weiter wird vorgeschlagen, dass der wenigstens eine Flugzeugsitz in der Verstaustellung eine Breite von 0,356 m (14 Zoll) aufweist. Unter einer "Breite" soll dabei insbesondere eine Erstreckung des Flugzeugsitzes in einer Sitzrichtung verstanden werden, die von einem hinteren Ende des Flugzeugsitzes, also vorzugsweise einer Rückseite der Rückenlehne, bis an ein vorderes Ende des Flugzeugsitzes, vorzugsweise eine Vorderkante des Sitzbodens, reicht. Dadurch kann der Flugzeugsitz besonders vorteilhaft klein ausgestaltet werden, wenn er in seine Verstaustellung verstellt ist.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Flugzeugsitzvorrichtung mit einem Flugzeugsitz einer Sitzreihe in einer Gebrauchsstellung,
- Fig. 2: eine schematische Darstellung der Sitzreihe mit dem Flugzeugsitz in einer Verstaustellung,
- Fig. 3: eine schematische Seitenansicht des Flugzeugsitzes in der Gebrauchsstellung,
- Fig. 4: eine schematische Seitenansicht des Flugzeugsitzes in der Verstaustellung und
- Fig. 5: eine schematische Ansicht eines Layouts mit mehreren Sitzreihen.

### Beschreibung des Ausführungsbeispiels

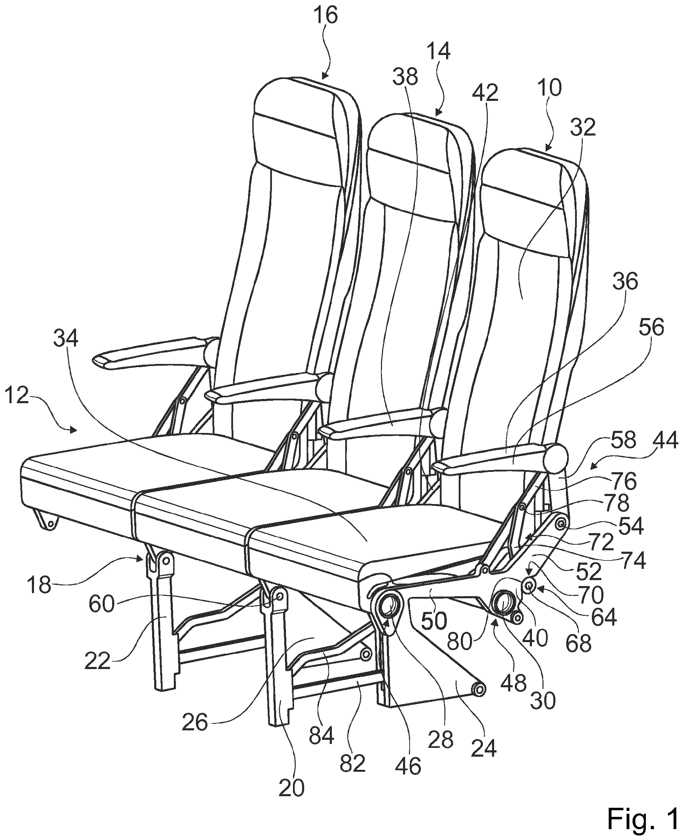

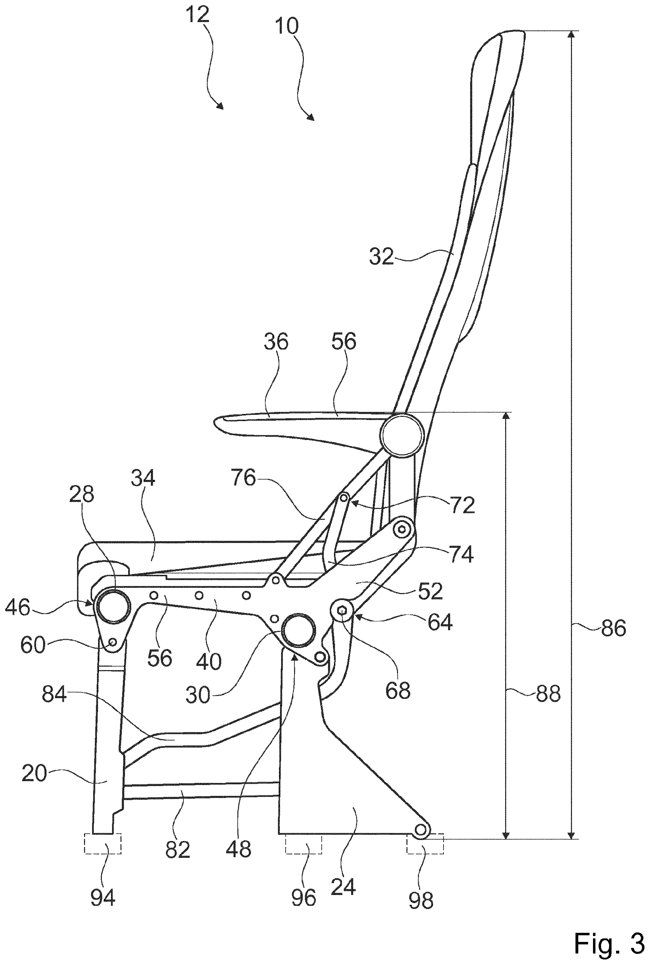

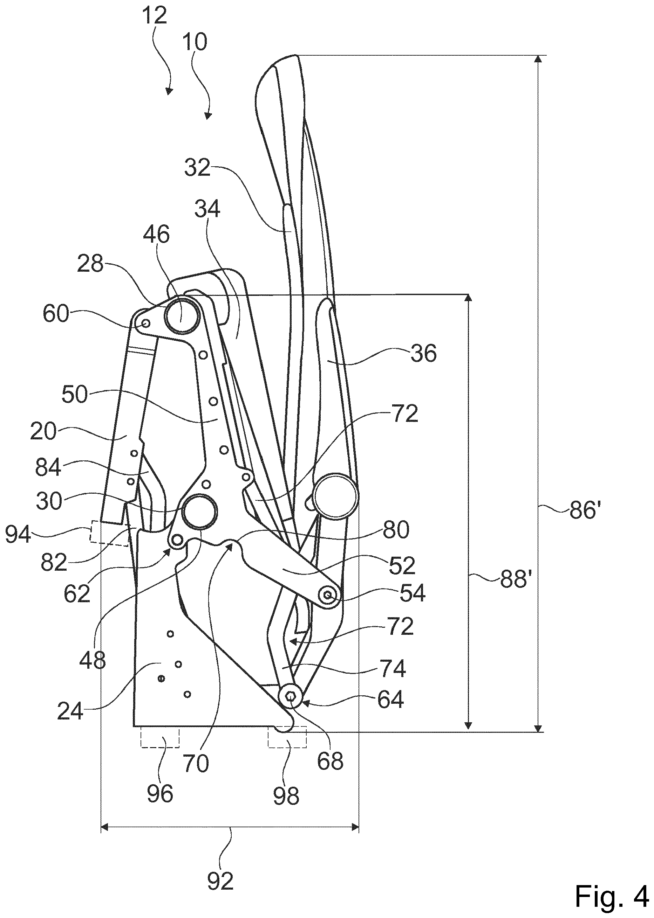

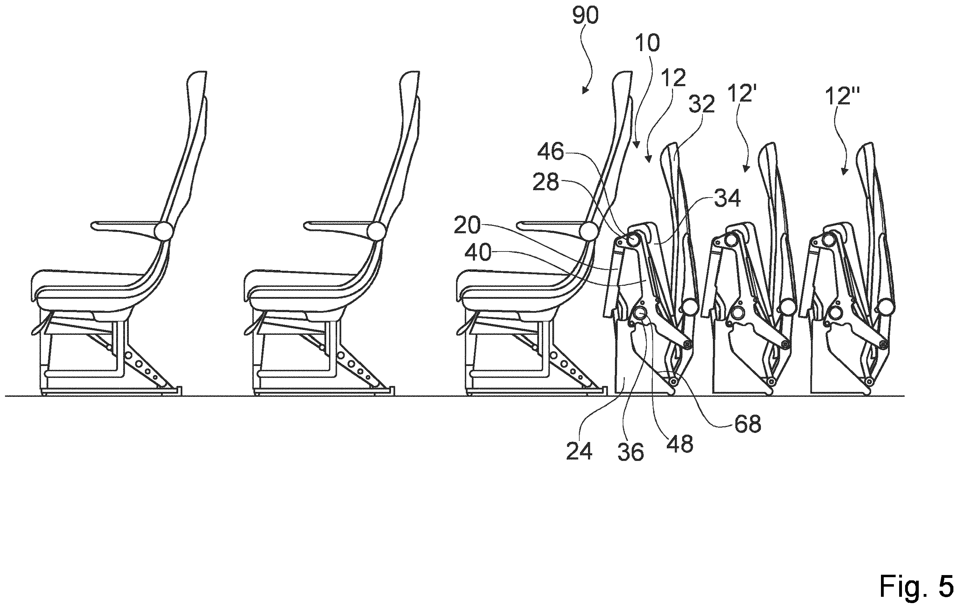

Die Figuren 1 bis 5 zeigen eine erfindungsgemäße Flugzeugsitzvorrichtung. Die Flugzeugsitzvorrichtung weist einen Flugzeugsitz 10 auf. Der Flugzeugsitz 10 ist Teil einer Sitzreihe 12 der Flugzeugsitzvorrichtung, die einen zweiten Flugzeugsitz 14 und einen dritten Flugzeugsitz 16 aufweist. Grundsätzlich wäre es auch denkbar, dass der Flugzeugsitz 10 als ein Einzelsitz ausgebildet ist oder dass die Sitzreihe 12 eine andere Anzahl an Flugzeugsitzen 10, 14, 16 aufweist, beispielsweise zwei oder mehr als drei. Die Flugzeugsitze 10, 14, 16 sind in einem montierten Zustand in einer nicht näher dargestellten Flugzeugkabine eines Flugzeugs aufgeständert. Zur Aufständerung weist die Flugzeugkabine zumindest zwei parallel verlaufende Befestigungsschienen auf, über die ein Flugzeugsitz 10, 14, 16 und/oder eine Sitzreihe 12 fest mit dem Kabinenboden verbunden werden kann.

Der Flugzeugsitz 10 weist eine Gebrauchsstellung und eine Verstaustellung auf. Alle Flugzeugsitze 10, 14, 16 der Flugzeugsitzvorrichtung weisen eine Gebrauchsstellung und eine Verstaustellung auf. Die Flugzeugsitze 10, 14, 16 einer Sitzreihe 12 sind jeweils zusammen zwischen ihrer Gebrauchsstellung und der Verstaustellung verschiebbar. Die gesamte Sitzreihe 12 ist dadurch zusammen zwischen der Gebrauchsstellung und der Verstaustellung verschiebbar. Dabei sind die Flugzeugsitze 10, 14, 16 in ihrer Gebrauchsstellung jeweils von einem Passagier benutzbar. In der Gebrauchsstellung sind die Flugzeugsitze 10, 14, 16 jeweils dazu vorgesehen, dass ein Passagier auf ihnen sitzen kann. In der Verstaustellung sind die Flugzeugsitze 10, 14, 16 nicht von einem Passagier benutzbar. Passagiere können in der Verstaustellung der Flugzeugsitze 10, 14, 16 nicht auf den Flugzeugsitzen 10, 14, 16 sitzen. Dabei sind die Flugzeugsitze 10, 14, 16 in der Verstaustellung besonders vorteilhaft klein zusammengefaltet und nehmen dadurch wenig Platz in der Flugzeugkabine ein. Die Flugzeugsitze 10, 14, 16 weisen in der Verstaustellung eine maximale Höhe auf, die kleiner ist als eine maximale Höhe in der Gebrauchsstellung. Grundsätzlich wäre es auch denkbar, dass eine maximale Höhe der Flugzeugsitze 10, 14, 16 in der Verstaustellung gleich groß ist wie ihre maximale Höhe in der Gebrauchsstellung.

Der Flugzeugsitz 10 weist eine Aufständereinheit 18 auf. Über die Aufständereinheit 18 ist der Flugzeugsitz 10 auf dem Kabinenboden des Flugzeugs aufgeständert. Über die Aufständereinheit 18 sind alle Flugzeugsitze 10, 14, 16 der Sitzreihe 12 auf dem Kabinenboden aufgeständert. Die Aufständereinheit 18 ist als eine gemeinsame Aufständereinheit 18 aller Flugzeugsitze 10, 14, 16 der Sitzreihe 12 ausgebildet. Die Aufständereinheit 18 umfasst zwei vordere Sitzfüße 20, 22. Grundsätzlich ist es auch denkbar, dass die Aufständereinheit 18 eine andere Anzahl an vorderen Sitzfüßen 20, 22 aufweist. Die vorderen Sitzfüße 20, 22, sind in einem in der Flugzeugkabine montierten Zustand über Fittings 94 in den Befestigungsschienen der Flugzeugkabine fest angeordnet. Die Fittings 94 weisen einen Verriegelzustand und einen Entriegelzustand auf. In dem Verriegelzustand sind die Fittings 94 fest in der Befestigungsschiene angeordnet und können axial nicht in der jeweiligen Befestigungsschiene verschoben werden. Dadurch sind die vorderen Sitzfüße 20, 22 in dem Verriegelzustand der Fittings 94 ortsfest in der Befestigungsschiene und damit der Flugzeugkabine angeordnet. In dem Entriegelzustand sind die Fittings 94 axial verschiebbar in den Befestigungsschienen angeordnet. Dadurch können die Sitzfüße 20, 22 in dem Entriegelzustand der Fittings 94 axial in den Befestigungsschienen verschoben werden und so entsprechend in der Flugzeugkabine platziert werden.

Die Aufständereinheit 18 umfasst zwei hintere Sitzfüße 24, 26. Grundsätzlich ist es auch denkbar, dass die Aufständereinheit 18 eine andere Anzahl an hinteren Sitzfüßen 24, 26 aufweist. Die hinteren Sitzfüße 24, 26 sind in einem in der Flugzeugkabine montierten Zustand jeweils über wenigstens eine Kopplungsstelle mit der Führungsschiene verbunden. Die hinteren Sitzfüße 24, 26 sind über zwei als Fittings 96, 98 ausgebildete Kopplungsstellen mit der Führungsschiene verbunden. Jeder der Sitzfüße 24, 26 ist über zwei Fittings 96, 98 mit der Führungsschiene gekoppelt. Die Fittings 96, 98 weisen einen Verriegelzustand und einen Entriegelzustand auf. In dem Verriegelzustand sind die Fittings 96, 98 fest in der Führungsschiene angeordnet und können axial nicht in der jeweiligen Führungsschiene verschoben werden. Dadurch sind die vorderen Sitzfüße 24, 26 in dem Verriegelzustand der Fittings 96, 98 ortsfest in der Befestigungsschiene und damit der Flugzeugkabine angeordnet. In der Entriegelstellung sind die Fittings 96, 98 axial verschiebbar in den Befestigungsschienen angeordnet. Dadurch können die hinteren Sitzfüße 24, 26 in dem Entriegelzustand der Fittings 96, 98 axial in den Befestigungsschienen verschoben werden und so entsprechend in der Flugzeugkabine platziert werden. Die Aufständereinheit 18 weist ein vorderes Tragrohr 28 auf. Die Aufständereinheit 18 weist ein hinteres Tragrohr 30 auf. Grundsätzlich wäre es auch denkbar, dass die Aufständereinheit 18 lediglich ein Tragrohr aufweist. Das vordere Tragrohr 28 und das hintere Tragrohr 30 erstrecken sich quer über im Wesentlichen die gesamte Breite der Sitzreihe 12 und bieten einen Grundaufbau für alle Flugzeugsitze 10, 14, 16 der Sitzreihe 12. Grundsätzlich ist es auch denkbar, dass die hinteren Sitzfüße 24, 26 jeweils über ein längliches Fitting mit der entsprechenden Führungsschiene gekoppelt sind. Dabei weist das entsprechende Fitting eine längliche Erstreckung auf, um eine bessere Anbindung der hinteren Sitzfüße 24, 26 zu gewährleisten und vorteilhaft besonders gut ein Moment in die Führungsschiene einleiten zu können.

Im Folgenden soll lediglich der eine Flugzeugsitz 10 der Sitzreihe 12 näher beschrieben werden, wobei die anderen Flugzeugsitze 14, 16 der Sitzreihe 12 im Wesentlichen gleich ausgebildet sind wie der beschriebene Flugzeugsitz 10. Der Flugzeugsitz 10 ist als ein gangseitiger Sitz ausgebildet. Der Flugzeugsitz 10 ist auf einer einem Gang der Flugzeugkabine zugewandten Seite der Sitzreihe 12 angeordnet. Der Flugzeugsitz 10 ist der erste von dem Gang der Flugzeugkabine erreichbare Flugzeugsitz 10 der Sitzreihe 12. Der Flugzeugsitz 10 umfasst eine Rückenlehne 32, einen Sitzboden 34, eine erste Armlehne 36, eine zweite Armlehne 38, einen ersten Sitzteiler 40, einen zweiten Sitzteiler 42 und einen Verstellmechanismus 44. Über den Verstellmechanismus 44 sind die Rückenlehne 32, der Sitzboden 34, die Armlehnen 36, 38 und die Sitzteiler 40, 42 bei einer Verstellung des Flugzeugsitzes 10 zwischen der Gebrauchsstellung und der Verstaustellung zueinander verstellbar. Grundsätzlich wäre es auch denkbar, dass der Flugzeugsitz 10 in einer anderen Ausgestaltung lediglich eine Rückenlehne und einen Sitzboden aufweist, die über einen Verstellmechanismus bei einer Verstellung des Flugzeugsitzes zwischen der Gebrauchsstellung und der Verstaustellung zueinander verstellbar sind. Grundsätzlich wäre es auch denkbar, dass der Flugzeugsitz in einer weiteren Ausgestaltung lediglich eine Rückenlehne, einen Sitzboden und wenigstens einen Sitzteiler aufweist, die über einen Verstellmechanismus bei einer Verstellung des Flugzeugsitzes zwischen der Gebrauchsstellung und der Verstaustellung zueinander verstellbar sind. Grundsätzlich wäre es auch denkbar, dass der Flugzeugsitz in einer zusätzlichen Ausgestaltung lediglich eine Rückenlehne, einen Sitzboden und einen Sitzteiler aufweist, die über einen Verstellmechanismus bei einer Verstellung des Flugzeugsitzes zwischen der Gebrauchsstellung und der Verstaustellung zueinander verstellbar sind. In einer weiteren Ausgestaltung wäre es grundsätzlich auch denkbar, dass der Flugzeugsitz lediglich eine Rückenlehne, wenigstens eine Armlehne und wenigstens einen Sitzteiler aufweist, die über einen Verstellmechanismus bei einer Verstellung des Flugzeugsitzes zwischen der Gebrauchsstellung und der Verstaustellung zueinander verstellbar sind.

Der Sitzboden 34 ist über die beiden Tragrohre 28, 30 mit der Aufständereinheit 18 verbunden. Dabei ist der Sitzboden 34 mit einem vorderen Ende über nicht näher dargestellte Befestigungsmittel mit dem vorderen Tragrohr 28 verbunden. Mit einem hinteren Ende ist der Sitzboden 34 starr mit dem hinteren Tragrohr 30 verbunden. Der erste Sitzteiler 40 und der zweite Sitzteiler 42 sind starr mit den Tragrohren 28, 30 der Aufständereinheit 18 verbunden. Die beiden Sitzteiler 40, 42 sind im Wesentlichen gleich ausgebildet, weswegen im Folgenden lediglich der erste Sitzteiler 40 näher beschrieben und in den Figuren bezeichnet werden soll. Es weisen die beiden Sitzteiler 40, 42 jeweils eine vordere Aufnahme 46 für das vordere Tragrohr 28 und eine hintere Aufnahme 48 für das hintere Tragrohr 30 auf. Die Aufnahmen 46, 48 sind als Formschlusselemente ausgebildet, über die die Tragrohre 28, 30 fest mit den Sitzteilern 40, 42 verbindbar sind. Dabei sind die Tragrohre 28, 30 axial in den Aufnahmen 46, 48 gesichert. Der erste Sitzteiler 40 ist auf der Gangseite des Flugzeugsitzes 10 angeordnet. In einem montierten Zustand ist es denkbar, dass der gangseitige erste Sitzteiler 40 von einer Verkleidung abgedeckt ist. Der Sitzteiler 40 weist einen ersten Teilbereich 50 auf, der sich im montierten Zustand im Wesentlichen zwischen den beiden Tragrohren 28, 30 erstreckt. Der erste Teilbereich 50 des Sitzteilers 40 bildet an seinem vorderen Ende die erste Aufnahme 46 und an einem hinteren Ende die Aufnahme 48 aus. Der Sitzteiler 40 weist einen zweiten Teilbereich 52 auf, der zu dem ersten Teilbereich 50 geneigt ausgebildet ist. Der zweite Teilbereich 52 schließt unmittelbar an ein hinteres Ende des ersten Teilbereichs 50 an. In der Gebrauchsstellung des Flugzeugsitzes 10 erstreckt sich der zweite Teilbereich 52 von dem ersten Teilbereich 50 nach oben, also von der Aufständerebene weg. An einem hinteren Ende des zweiten Teilbereichs weist der Sitzteiler 40 eine Lagerstelle 54 auf. Die Lagerstelle 54 ist als eine Armlehnenaufnahme ausgebildet. Über die als Armlehnenaufnahme ausgebildete Lagerstelle 54 ist die Armlehne 36 mit dem Sitzteiler 40 verbunden. Über die Lagerstelle 54 ist die Armlehne 36 gelenkig mit dem Sitzteiler 40 verbunden. Die Armlehne 36 umfasst einen Armlehnenkörper 56, der eine Auflagefläche ausbildet, auf der ein Passagier seinen Arm auflegen kann, und einen Armlehnenträger 58, der den Armlehnenkörper 56 über die Lagerstelle 54 mit dem Sitzteiler 40 koppelt. Mit einem unteren Ende ist der Armlehnenträger 58 über die Lagerstelle 54 gelenkig mit dem Sitzteiler 40 verbunden. Dabei ist der Armlehnenträger 58 aus seiner Stellung in der Gebrauchsstellung des Flugzeugsitzes 10 um eine von der Lagerstelle 54 gebildete Schwenkachse in Richtung des ersten Teilbereichs 50 des Sitzteilers 40 schwenkbar. An einem oberen Ende des Armlehnenträgers 58 ist der Armlehnenkörper 56 schwenkbar mit dem Armlehnenträger 58 verbunden. Aus der Gebrauchsstellung heraus, in der der Armlehnenkörper 56 im Wesentlichen parallel zu dem Sitzboden 34 ausgerichtet ist, kann der Armlehnenkörper 56 über die Anbindung an den Armlehnenträger 58 nach oben in Richtung der Rückenlehne 32 geschwenkt werden. Grundsätzlich wäre es auch denkbar, dass auch die Rückenlehne 32 über die Lagerstelle 54 an den Sitzteiler 40 angebunden ist.

Der zweite Sitzteiler 42 ist zwischen dem ersten Flugzeugsitz 10 und dem zweiten Flugzeugsitz 14 angeordnet. Der zweite Sitzteiler 42, der im Wesentlichen identisch zu dem ersten Sitzteiler 40 ausgebildet ist, trennt den ersten Flugzeugsitz 10 und den zweiten Flugzeugsitz 14 voneinander ab. Dabei bildet der zweite Sitzteiler 42 äquivalent zu dem ersten Sitzteiler 40 eine nicht näher bezeichnete Armlehnenaufnahme für die Armlehne 38 aus, über die die Armlehne 38 schwenkbar mit dem zweiten Sitzteiler 42 gekoppelt ist. Der zweite Sitzteiler 42 weist unterhalb seiner Aufnahme für das vordere Tragrohr 28 eine Lagerstelle 60 auf. Über die Lagerstelle 60 ist der vordere Sitzfuß 20 mit dem Sitzteiler 42 verbunden. Dabei ist der vordere Sitzfuß 20 gelenkig mit dem Sitzteiler 42 verbunden. Dabei bildet die Lagerstelle 60 eine Rotationsachse aus, über die der Sitzfuß 20 mit dem Sitzteiler 42 schwenkbar verbunden ist. Der zweite Sitzteiler 42 weist unterhalb seiner Aufnahme für das hintere Tragrohr 30 eine Lagerstelle 62 für den hinteren Sitzfuß 24 auf. Dabei ist der hintere Sitzfuß 24 gelenkig mit dem Sitzteiler 42 verbunden. Dabei bildet die Lagerstelle 62 eine Rotationsachse aus, über die der hintere Sitzfuß 24 mit dem Sitzteiler 42 schwenkbar verbunden ist. Um die Rotationsachse, die die Lagerstelle 62 für den hinteren Sitzfuß 24 ausbildet, sind der Sitzteiler 42 und die über die Tragrohre 28, 30 mit dem Sitzteiler 42 verbundenen weiteren Sitzteiler 40 der Sitzreihe 12 schwenkbar. Die Rotationsachse, die die Lagerstelle 62 für den hinteren Sitzfuß 24 ausbildet, bildet die Achse aus, um die der Sitzboden 34 bei einer Verstellung des Flugzeugsitzes 10 zwischen der Gebrauchsstellung und der Verstaustellung rotiert. Grundsätzlich wäre es ebenfalls denkbar, dass die Sitzfüße 20, 24 nicht direkt an den Sitzteiler 42 angebunden sind. Dabei wäre es denkbar, dass die Sitzfüße 20, 24 über ein Zwischenstück mit dem entsprechenden Sitzteiler 42 gekoppelt werden können. Grundsätzlich ist es ebenfalls denkbar, dass die Sitzfüße 20, 24 direkt an die Tragrohre 28, 30 angebunden sind.

An einem unteren Ende der Rückenlehne 32 weist der Verstellmechanismus 44 eine Koppelstelle 64, 66 auf, über die die Rückenlehne 32 mit den Sitzteilern 40, 42 in der Gebrauchsstellung gekoppelt ist. Die Koppelstellen 64, 66 sind an dem unteren Ende jeweils seitlich an der Rückenlehne 32 angeordnet. Die Koppelstellen 64, 66 weisen jeweils Formschlusselemente auf, über die die Rückenlehne 32 jeweils formschlüssig mit dem entsprechenden Sitzteiler 40, 42 verbindbar ist. Die Koppelstellen 64, 66 weisen als Erhebungen ausgebildete Formschlusselemente 68 auf, die sich von der Rückenlehne 32 seitlich nach außen bis in einen Bereich hinter den entsprechenden Sitzteiler 40, 42 erstrecken, mit dem sie in einer Gebrauchsstellung gekoppelt sind. Die Sitzteiler 40, 42, weisen korrespondierend zu den Koppelstellen 64, 66 ausgebildete Koppelstellen 70 auf. Die Koppelstellen 70 sind als zu den Formschlusselementen 68 der Koppelstellen 64, 66 korrespondierend ausgebildete Formschlusselemente 80 ausgebildet. Die Koppelstellen 70 sind dabei als Ausnehmungen ausgebildet, die in eine Unterseite der zweiten Teilbereiche 52 der Sitzteiler 40, 42 eingebracht sind. In einer Gebrauchsstellung des Flugzeugsitzes 10 sind die Formschlusselemente 80 der Koppelstellen 64, 66 der Rückenlehne 32 formschlüssig in den als Ausnehmungen ausgebildeten Koppelstellen 70 der Sitzteiler 40, 42 angeordnet. Über diese formschlüssige Verbindung zwischen den Formschlusselementen 80 der Koppelstellen 64, 66 der Rückenlehne 32 und den als Ausnehmungen ausgebildeten Koppelstellen 70 der Sitzteiler 40, 42 ist die Rückenlehne 32 in der Gebrauchsstellung fest mit den Sitzteilern 40, 42 verbunden.

Der Verstellmechanismus 44 umfasst je Armlehne 36, 38 eine Einzugskinematik 72, die dazu vorgesehen ist, die entsprechende Armlehne 36, 38 bei einer Verstellung des Flugzeugsitzes 10 in die Verstaustellung einzuklappen. Bei einer Verstellung des Flugzeugsitzes 10 in die Gebrauchsstellung sind die Einzugskinematiken 72 jeweils dazu vorgesehen, die entsprechende Armlehne 36, 38 wieder auszuklappen. Die Einzugskinematiken 72 für die beiden Armlehnen 36, 38 sind jeweils identisch ausgebildet, weswegen im Folgenden lediglich die eine Einzugskinematik 72 für die Armlehne 36 näher beschrieben wird. Die Einzugskinematik 72 umfasst einen ersten Hebel 74, der schwenkbar mit der Rückenlehne 32 gekoppelt ist. Dabei ist der Hebel 74 mit einem ersten Ende schwenkbar an der Unterseite der Rückenlehne 32 angebunden. Der Hebel 74 weist einen Lagerbolzen auf, über den der Hebel 74 schwenkbar mit der Rückenlehne 32 verbunden ist. Der Lagerbolzen, über den der Hebel 74 mit der Rückenlehne 32 gekoppelt ist, bildet das Formschlusselement 68 der Koppelstelle 64 aus. Ein Kopf des Lagerbolzens bildet das Formschlusselement 68 der Koppelstelle 64 aus. Grundsätzlich ist es auch denkbar, dass das Formschlusselement 68 der Koppelstelle 64 als ein von dem Lagerbolzen getrennt ausgebildetes, separates Formschlusselement ausgebildet ist. Der Hebel 74 weist dabei eine leicht gebogene Form auf. Die Einzugskinematik 72 weist einen zweiten Hebel 76 auf. Der zweite Hebel 76 ist mit einem ersten Ende schwenkbar mit dem Sitzteiler 40 gekoppelt. Mit einem zweiten Ende ist der zweite Hebel 76 mit der Armlehne 36 gekoppelt. Der zweite Hebel 76 weist eine Lagerstelle 78 auf, über die der zweite Hebel 76 mit einem zweiten Ende des ersten Hebels 74 schwenkbar verbunden ist. Die Lagerstelle 78 ist dabei in etwa mittig zwischen dem ersten Ende und dem zweiten Ende des zweiten Hebels 76 angeordnet.

Der Verstellmechanismus 44 weist je Sitzfußpaar, also einem vorderen Sitzfuß 20, 22, und einem hinteren Sitzfuß 24, 26, die in der gleichen Führungsschiene angeordnet sind, jeweils ein erstes Verbindungselement 82 und ein zweites Verbindungselement 84 auf. Das erste Verbindungselement 82 verbindet den vorderen Sitzfuß 20 und den hinteren Sitzfuß 24 des einen Sitzfußpaars. Die Verbindungselemente 82, 84 sind mit ihren Enden jeweils schwenkbar mit einem Sitzfuß 20, 24 bzw. der Koppelstelle 64, 66 verbunden. Mit einem vorderen Ende sind die beiden Verbindungselemente 82, 84 in einem unteren Bereich des vorderen Sitzfußes 20 schwenkbar angebunden. Dabei ist das erste Verbindungselement 82 unterhalb des zweiten Verbindungselements 84 angeordnet. Das erste Verbindungselement 82 ist als ein gerades Stangenelement ausgebildet. In der Gebrauchsstellung verläuft das erste Verbindungselement 82 im Wesentlichen parallel zu der Aufständerebene, auf der der Flugzeugsitz 10 aufgeständert ist. Mit einem zweiten Ende ist das erste Verbindungselement 82 mit dem hinteren Sitzfuß 24 gelenkig verbunden. Eine Anbindung des ersten Verbindungselements 82 an den hinteren Sitzfuß 24 liegt dabei auf einer gleichen Höhe wie eine Anbindung des ersten Verbindungselements 82 an den vorderen Sitzfuß 20. Das zweite Verbindungselement 84 ist als ein gebogenes Stangenelement ausgebildet. Dabei verläuft das zweite Verbindungselement 84 in der Gebrauchsstellung von seiner unteren Anbindung an den vorderen Sitzfuß 20 nach oben von der Aufständerebene weg in Richtung des zweiten Sitzfußes 24. Das zweite Verbindungselement 84 ist mit seinem zweiten Ende an die Koppelstelle 68 gelenkig angebunden.

Der Flugzeugsitz 10 ist in seiner Gebrauchsstellung verriegelt. Dabei ist der Flugzeugsitz 10 in der Gebrauchsstellung so verriegelt, dass er nicht ungewollt in die Verstaustellung verfahren kann. Dabei weist der Flugzeugsitz 10 eine nicht näher dargestellte Verriegelungsmechanik auf. Die Verriegelungsmechanik ist dabei vorzugsweise in die Einzugsmechanik 72 integriert. Grundsätzlich wäre es auch denkbar, dass die Verriegelungsmechanik in die Koppelstellen zwischen der Rückenlehne 32 und den Sitzteilern 40, 42 oder zwischen den Sitzteilern 40, 42 und den Sitzfüßen 20, 22, 24, 26 angeordnet ist. Dabei ist es denkbar, dass die Verriegelungsmechanik Rast- und oder Formschlusselemente aufweist, die zwei zum Erreichen der Verstaustellung zueinander bewegliche Teile des Flugzeugsitzes 10 formschlüssig miteinander verbinden.

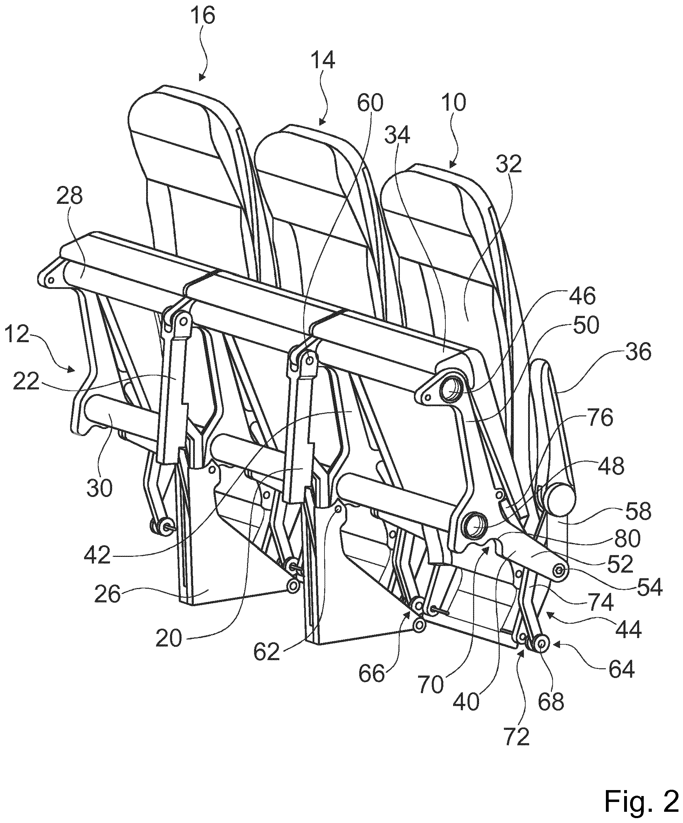

Die Flugzeugsitze 10, 14, 16 weisen in der Gebrauchsstellung eine Rückenlehnenhöhe 86 von 45 Zoll auf (Figur 1 und Figur 2). Die Rückenlehnenhöhe 86 bildet die Höhe, die die Flugzeugsitze 10, 14, 16 von der Aufständerebene bis hin zu einer oberen Kante ihrer Rückenlehne 32 aufweisen. In der Gebrauchsstellung weist der Flugzeugsitz 10, der zu einer Gangseite hin angeordnet ist, eine Gangseitenhöhe 88 von 25 Zoll auf. Die Gangseitenhöhe 88 beschreibt die Höhe des Flugzeugsitzes 10 im Bereich des Sitzteilers 40 und der Armlehne 36, die dem Gang in der Flugzeugkabine zugewandt ist. Die Gangseitenhöhe 88 ist dabei insbesondere die Höhe des Flugzeugsitzes 10 von einem dem Gang der Flugzeugkabine zugewandten Ende des Flugzeugsitzes 10 bis hin zu der dem Gang zugewandten Seite der Rückenlehne 32. In der Verstaustellung weist der Flugzeugsitz 10 eine Rückenlehnenhöhe 86 auf, die kleiner ist als 1,143 m (45 Zoll). In der Verstaustellung weist der Flugzeugsitz 10 eine Gangseitenhöhe 88 auf, die kleiner ist als 0,635 m (25 Zoll).

Bei einer Verstellung des Flugzeugsitzes 10 aus der Gebrauchsstellung in die Verstaustellung wird die Rückenlehne 32 im Wesentlichen vertikal nach unten bewegt. Dadurch verkleinert sich die Rückenlehnenhöhe 86 des Flugzeugsitzes 10 bei der Verstellung aus der Gebrauchsstellung in die Verstaustellung. Zur Verstellung aus der Gebrauchsstellung in die Verstaustellung sind die vorderen Sitzfüße 20, 22 dazu vorgesehen, aus der entsprechenden Führungsschiene der Flugzeugkabine entkoppelt zu werden. Dazu werden die Fittings 94 der Sitzfüße 20, 22 aus der Führungsschiene der Flugzeugkabine gelöst. Dadurch ist das vordere Ende des Flugzeugsitzes 10 und der restlichen Flugzeugsitze 14, 16 der Sitzreihe 12 von der Flugzeugkabine entkoppelt. Durch den Verstellmechanismus 44 lässt sich nun das vordere Ende des Sitzbodens 34 mit den Sitzteilern 40, 42 und den Tragrohren 28, 30 um die Rotationsachse der Lagerstelle 62, um welche die Sitzteiler 40, 42 schwenkbar zu den hinteren Sitzfüßen 24, 26 ausgebildet sind, verschieben. Über die Hebel 74, 76 der Einzugskinematik 72 wird die Armlehne 36 eingeklappt. Des Weiteren wird über die Hebel 74, 76 der Einzugskinematik 72 das untere Ende der Rückenlehne 32 nach unten in Richtung der Aufständerebene bewegt. Dadurch löst sich die Koppelstelle 70 der Rückenlehne 32 von den Koppelstellen 64 des Sitzteilers 40. Die Rückenlehne 32 wird in ihrer Ruhestellung nach unten in Richtung der Aufständerebene bewegt. In der Verstaustellung sind die Sitzteiler 40, 42 im Unterschied zu der Gebrauchsstellung im Wesentlichen um 90 Grad nach oben verkippt. Hintere Enden der Sitzteiler 40, 42 sind in der Verstaustellung im Gegensatz zu der Gebrauchsstellung in Richtung der Aufständerebene verschoben. Eine Verstellung des Flugzeugsitzes 10 aus der Verstaustellung in die Gebrauchsstellung erfolgt entsprechend umgekehrt. Es werden durch die Verstellung eines Flugzeugsitzes 10, 14, 16 der Sitzreihe 12 immer alle Flugzeugsitze 10, 14, 16 der Sitzreihe 12 verstellt. Dadurch können alle Flugzeugsitze 10, 14, 16 einer Sitzreihe 12 einfach zusammen zwischen der Gebrauchsstellung und der Verstaustellung verstellt werden. In der Verstaustellung weist der Flugzeugsitz 10 eine Rückenlehnenhöhe 86' auf, die kleiner ist als 1,143 m (45 Zoll). Grundsätzlich wäre es auch denkbar, dass die Rückenlehnenhöhe 86' des Flugzeugsitzes 10 in der Verstaustellung 1,143 m (45 Zoll) aufweist. Dadurch, dass die Rückenlehnenhöhe 86' in der Verstaustellung 1,143 m (45 Zoll). beträgt, können vorteilhaft Vorgaben der Airlines und/oder Flugzeughersteller erfüllt werden sowie eine vorteilhafte Sicht in der Flugzeugkabine garantiert werden. Der Flugzeugsitz 10 weist in der Verstaustellung eine Gangseitenhöhe 88' auf, die kleiner ist als 0,635 m (25 Zoll). Grundsätzlich wäre es auch denkbar, dass der Flugzeugsitz 10 in der Verstaustellung eine Gangseitenhöhe 88 von 0,635 m (25 Zoll) aufweist. Dadurch kann vorteilhaft eine Vorgabe der Airlines und/oder Flugzeughersteller erfüllt werden, nach der keine Elemente des Flugzeugsitzes 10 über 0,635 m (25 Zoll) in einen Gangbereich hineinragen dürfen. Eine Breite 92 des Flugzeugsitzes 10 in Sitzrichtung beträgt in der Verstaustellung 0,356 m (14 Zoll). Dadurch kann der Flugzeugsitz 10 in der Verstaustellung besonders vorteilhaft kompakt ausgebildet werden.

Grundsätzlich soll angemerkt werden, dass es denkbar ist, dass die vorderen Sitzfüße 20, 22 zur Verstellung von der Gebrauchsstellung in die Verstaustellung nicht mit ihren Fittings 94 aus der Führungsschiene gelöst werden müssen. Es ist denkbar, dass die vorderen Sitzfüße 20, 22 eine Art Teleskopgelenk oder eine Kinematik aufweisen, mittels der die Sitzfüße 20, 22 zwischen zwei unterschiedlichen Längen verstellbar sind. Dabei wären die Sitzfüße 20, 22 in der Gebrauchsstellung in ihrer kurzen Stellung. Zum Verstellen der Flugzeugsitze 10, 14, 16 der Sitzreihe 12 aus der Gebrauchsstellung in die Verstaustellung wäre es denkbar, dass die Sitzfüße 20, 22 mittels des Teleskopgelenks oder einer andersartig ausgestalteten Kinematik verlängert werden, sodass die Sitzteiler 40, 42, der Sitzboden 34 und die Tragrohre 28, 30 entsprechend dem oben beschriebenen Ausführungsbeispiel geschwenkt werden können.

Die zwei Fittings 96, 98, über die jeweils ein hinterer Sitzfuß 24, 26 in den Führungsschienen der Flugzeugkabine aufgeständert ist, sind dazu vorgesehen, gelöst zu werden, sodass die Sitzreihe 12, die von den Flugzeugsitzen 10, 14, 16 gebildet ist, in der Flugzeugkabine verschoben werden kann. So kann die Sitzreihe 12, wenn sie in der Verstaustellung ist, in eine entsprechende Position in der Flugzeugkabine geschoben werden, sodass sie möglichst wenig Raum einnimmt. Die Sitzreihe 12 ist dabei Teil eines Kabinenlayouts, das mehrere in der Flugzeugkabine angeordnete Sitzreihen 12 umfasst. Dabei weist das Kabinenlayout beispielsweise vier äquivalent zu der oben beschriebenen Sitzreihe 12 ausgebildete Sitzreihen 12', 12" auf. Diese Sitzreihen 12, 12', 12" sind dabei vorteilhaft hintereinander angeordnet. Weiter weist die Flugzeugkabine weitere Sitzreihen 90 auf, die Flugzeugsitze aufweisen, die nicht zwischen einer Gebrauchsstellung und einer Verstaustellung verstellbar sind. Dabei sind jeweils mehrere Sitzreihen 90 vor und hinter den verstellbaren Sitzreihen 12, 12', 12" angeordnet. Grundsätzlich wäre es auch denkbar, dass die Sitzreihen 12, 12', 12" an einem Ende der Flugzeugkabine angeordnet sind und die unverstellbaren Sitzreihen 90 lediglich vor den Sitzreihen 12, 12', 12" angeordnet sind. Je nach Auslastung der Flugzeugs könnten während eines Flugs in der Flugzeugkabine nun Sitzreihen 12, 12', 12" in Gebrauchsstellung oder Verstaustellung angeordnet werden. Sind mehrere Sitzreihen 12, 12', 12" hintereinander in der Verstaustellung angeordnet, so überlappen sich die Rückenlehnen 32 der vorderen Flugzeugsitze 10 zumindest teilweise mit dem Sitzboden 34 und/oder der Aufständereinheit 18 des dahinter angeordneten Flugzeugsitzes 10. Sitzreihen 12, 12', 12", die nicht benötigt werden und deshalb in Verstaustellung angeordnet sind, könnten möglichst platzsparend zusammengeschoben werden. Die in Gebrauch befindlichen unverstellbaren Sitzreihen 90 und die in Gebrauch befindlichen verstellbaren Sitzreihen 12, 12', 12", 12 können nun entsprechend mit mehr oder weniger Abstand zueinander in der Flugzeugkabine befestigt werden, sodass bei geringerer Auslastung Sitzreihen 12, 12', 12", 90 mit mehr Beinfreiheit für Passagiere bereitgestellt werden können.

### Bezugszeichen

- 10: Flugzeugsitz
- 12: Sitzreihe
- 14: Flugzeugsitz
- 16: Flugzeugsitz
- 18: Aufständereinheit
- 20: vorderer Sitzfuß
- 22: vorderer Sitzfuß
- 24: hinterer Sitzfuß
- 26: hinterer Sitzfuß
- 28: vorderes Tragrohr
- 30: hinteres Tragrohr
- 32: Rückenlehne
- 34: Sitzboden
- 36: Armlehne
- 38: Armlehne
- 40: Sitzteiler
- 42: Sitzteiler
- 44: Verstellmechanismus
- 46: Aufnahme
- 48: Aufnahme
- 50: erster Teilbereich
- 52: zweiter Teilbereich
- 54: Lagerstelle
- 56: Armlehnenkörper
- 58: Armlehnenträger
- 60: Lagerstelle
- 62: Lagerstelle
- 64: Koppelstelle
- 66: Koppelstelle
- 68: Formschlusselement
- 70: Koppelstelle
- 72: Einzugskinematik
- 74: Hebel
- 76: Hebel
- 78: Lagerstelle
- 80: Formschlusselement
- 82: Verbindungselement
- 84: Verbindungselement
- 86: Rückenlehnenhöhe
- 88: Gangseitenhöhe
- 90: Sitzreihe
- 92: Breite
- 94: Fitting
- 96: Fitting
- 98: Fitting

## Patentansprüche

1. Flugzeugsitzvorrichtung mit wenigstens einem Flugzeugsitz (10, 14, 16), der zumindest dazu vorgesehen ist, zwischen einer Gebrauchsstellung und einer Verstaustellung verstellt zu werden, und wenigstens eine Rückenlehne (32) und wenigstens einen Verstellmechanismus (44) aufweist, wobei die Rückenlehne (32) bei einer Verstellung zwischen der Gebrauchsstellung und der Verstaustellung des Flugzeugsitzes (10, 14, 16) mittels des Verstellmechanismus (44) zumindest teilweise verstellt wird, wobei der Flugzeugsitz (10, 14, 16) in der Verstaustellung eine maximale Höhe aufweist, die kleiner ist als eine maximale Höhe in der Gebrauchsstellung **dadurch gekennzeichnet, dass** der wenigstens eine Verstellmechanismus (44) die Rückenlehne (32) bei einer Verstellung aus der Gebrauchsstellung in die Verstaustellung im Wesentlichen vertikal nach unten bewegt.

2. Flugzeugsitzvorrichtung nach Anspruch 1, **dadurch gekennzeichnet, dass** der Flugzeugsitz (10, 14, 16) wenigstens einen Sitzteiler (40, 42), wenigstens eine Armlehne (36, 38) und/oder wenigstens einen Sitzboden (34) aufweist, wobei der Sitzteiler (40, 42), die Armlehne (36, 38) und/oder der Sitzboden (34) bei einer Verstellung zwischen der Gebrauchsstellung und der Verstaustellung des Flugzeugsitzes (10, 14, 16) mittels des Verstellmechanismus (44) zumindest teilweise verstellt werden.

3. Flugzeugsitzvorrichtung nach Anspruch 1 oder 2, **dadurch gekennzeichnet, dass** der Verstellmechanismus (44) an einem hinteren Ende des Sitzteilers (40, 42) wenigstens eine Lagerstelle (54) aufweist, über die der Sitzteiler (40, 42) drehbar mit der Rückenlehne (32) und/oder der Armlehne (36, 38) verbunden ist.

4. Flugzeugsitzvorrichtung zumindest nach Anspruch 2, **dadurch gekennzeichnet, dass** der Verstellmechanismus (44) an dem unteren Ende der Rückenlehne (32) eine Koppelstelle (64, 66) aufweist, mit der die Rückenlehne (32) in der Gebrauchsstellung mit dem wenigstens einen Sitzteiler (40, 42) gekoppelt ist.

5. Flugzeugsitzvorrichtung zumindest nach Anspruch 2, **dadurch gekennzeichnet, dass** der Verstellmechanismus (44) wenigstens eine Einzugskinematik (72) aufweist, die dazu vorgesehen ist, die Armlehne (36, 38) bei einer Verstellung in die Verstaustellung einzuklappen.

6. Flugzeugsitzvorrichtung zumindest nach Anspruch 4, **dadurch gekennzeichnet, dass** der wenigstens eine Sitzteiler (40, 42) wenigstens eine als Ausnehmung ausgebildete Koppelstelle (70) aufweist, in die die von der Rückenlehne (32) gebildete Koppelstelle (64, 66) des Verstellmechanismus (44) wenigstens in der Gebrauchsstellung formschlüssig eingreift.

7. Flugzeugsitzvorrichtung nach einem der vorhergehenden Ansprüche, **dadurch gekennzeichnet, dass** der Flugzeugsitz (10, 14, 16) wenigstens einen vorderen Sitzfuß (20, 22) aufweist, der zur Überführung des Flugzeugsitzes (10, 14, 16) in die Verstaustellung dazu vorgesehen ist, aus einer Führungsschiene entkoppelt zu werden.

8. Flugzeugsitzvorrichtung nach einem der vorhergehenden Ansprüche, **dadurch gekennzeichnet, dass** der Flugzeugsitz (10, 14, 16) wenigstens einen hinteren Sitzfuß (24, 26) aufweist, der dazu vorgesehen ist, über wenigstens eine Kopplungsstelle mit einer Führungsschiene gekoppelt zu werden.

9. Flugzeugsitzvorrichtung zumindest nach Anspruch 2 und 8, **dadurch gekennzeichnet, dass** der Verstellmechanismus (44) im Bereich einer hinteren Tragrohranbindung des Sitzteilers (40, 42) eine Lagerstelle (62) ausbildet, über die der Sitzteiler (40, 42) schwenkbar mit dem hinteren Sitzfuß (24, 26) gekoppelt ist.

10. Flugzeugsitzvorrichtung nach einem der vorhergehenden Ansprüche, **gekennzeichnet durch** wenigstens einen weiteren Flugzeugsitz (14, 16), der mit dem Flugzeugsitz (10) eine Sitzreihe (12) ausbildet.

11. Flugzeugsitzvorrichtung nach Anspruch 10, **dadurch gekennzeichnet, dass** die zumindest zwei Flugzeugsitze (10, 14, 16) einer Sitzreihe (12) gemeinsam zwischen der Gebrauchsstellung und der Verstaustellung verstellbar sind.

## Claims

1. Airplane seat device with at least one airplane seat (10, 14, 16) that is at least configured to be adjusted between a use position and a stowage position and comprises at least one backrest (32) and at least one adjustment mechanism (44), wherein in an adjustment between the use position and the stowage position of the airplane seat (10, 14, 16) the backrest (32) is at least partially adjusted by means of the adjustment mechanism (44)
and wherein in the stowage position the airplane seat (10, 14, 16) has a maximum height that is smaller than a maximum height in the use position,
**characterized in that** the at least one adjustment mechanism (44) moves the backrest (32) essentially vertically downwards in an adjustment from the use position into the stowage position.

2. Airplane seat device according to claim 1, **characterised in that** the airplane seat (10, 14, 16) comprises at least one seat divider (40, 42), at least one armrest (36, 38) and/or at least one seat bottom (34), wherein in an adjustment between the use position and the stowage position of the airplane seat (10, 14, 16), the seat divider (40, 42), the armrest (36, 38) and/or the seat bottom (34) are at least partially adjusted by means of the adjustment mechanism (44).

3. Airplane seat device according to claim 1 or 2, **characterised in that** the adjustment mechanism (44) comprises, on a rear end of the seat divider (40, 42), at least one support point (54) via which the seat divider (40, 42) is rotatably connected with the backrest (32) and/or with the armrest (36, 38).

4. Airplane seat device at least according to claim 2, **characterised in that** the adjustment mechanism (44) comprises, at the lower end of the backrest (32), a coupling point (64, 66) via which the backrest (32) is coupled with the at least one seat divider (40, 42) in the use position.

5. Airplane seat device at least according to claim 2, **characterised in that** the adjustment mechanism (44) comprises at least one retraction kinematic (72), which is configured for a folding-back of the armrest (36, 38) in an adjustment into the stowage position.

6. Airplane seat device at least according to claim 4, **characterised in that** the at least one seat divider (40, 42) comprises at least one coupling point (70) which is embodied as a recess and in which the coupling region (64, 66) of the adjustment mechanism (44) that is formed by the backrest (32) engages in a form-fit fashion at least in the use position.

7. Airplane seat device according to one of the preceding claims, **characterised in that** the airplane seat (10, 14, 16) comprises at least one front seat foot (20, 22) which is, for a transfer of the airplane seat (10, 14, 16) into the stowage position, configured to be decoupled from a guide rail.

8. Airplane seat device according to one of the preceding claims, **characterised in that** the airplane seat (10, 14, 16) comprises at least one rear seat foot (24, 26), which is configured to be coupled with a guide rail via at least one coupling point.

9. Airplane seat device at least according to claims 2 and 8, **characterised in that** the adjustment mechanism (44) forms, in a region of a rear support tube connection of the seat divider (40, 42), a support point (62) via which the seat divider (40, 42) is pivotably connected with the rear seat foot (24, 26).

10. Airplane seat device according to one of the preceding claims, **characterised by** at least one further airplane seat (14, 16) forming a seat row (12) with the airplane seat (10).

11. Airplane seat device according to claim 10, **characterised in that** the at least two airplane seats (10, 14, 16) of a seat row (12) are together adjustable between the use position and the stowage position.

## Revendications

1. Dispositif de siège d'aéronef, avec au moins un siège d'aéronef (10, 14, 16) qui est au moins configuré à être ajusté entre une position d'usage et une position de rangement et qui comprend au moins un dossier (32) et au moins un mécanisme d'ajustement (44),
où en un ajustement entre la position d'usage et la position de rangement du siège d'aéronef (10, 14, 16), le dossier (32) est au moins partiellement ajusté,
le siège d'aéronef (10, 14, 16) ayant une hauteur maximale dans la position de rangement qui est inférieure à une hauteur maximale dans la position d'usage, **caractérisé en ce qu'**en l'ajustement de la position d'usage dans la position de rangement, l'au moins un mécanisme d'ajustement (44) meut le dossier (32) sensiblement verticalement vers le bas.

2. Dispositif de siège d'aéronef selon la revendication 1,
**caractérisé en ce que** le siège d'aéronef (10, 14, 16) comporte au moins un partageur de sièges (40, 42), au moins un appuie-bras (36, 38) et/ou au moins une assise de siège (34), le partageur de sièges (40, 42), l'appuie-bras (36, 38) et/ou l'assise de siège (34) étant au moins partiellement ajusté/s en un ajustement entre la position d'usage et la position de rangement du siège d'aéronef (10, 14, 16).

3. Dispositif de siège d'aéronef selon la revendication 1 ou 2,
**caractérisé en ce que** le mécanisme d'ajustement (44) comporte sur une extrémité arrière du partageur de sièges (40, 42) au moins un endroit de support (54), par le biais duquel le partageur de sièges (40, 42) est raccordé au dossier (32) et/ou à l'appuie-bras (36, 38) d'une manière rotative.

4. Dispositif de siège d'aéronef au moins selon la revendication 2,
**caractérisé en ce que** le mécanisme d'ajustement (44) comporte sur l'extrémité inférieure du dossier (32) un endroit de raccordement (64, 66) par le biais duquel le dossier (32) est raccordé à l'au moins un partageur de sièges (40, 42) dans la position d'usage.

5. Dispositif de siège d'aéronef au moins selon la revendication 2,
**caractérisé en ce que** le mécanisme d'ajustement (44) comporte au moins une cinématique rétractante (72) qui est configurée à rebattre l'appuie-bras (36, 38) en un ajustement dans la position de rangement.

6. Dispositif de siège d'aéronef au moins selon la revendication 4,
**caractérisé en ce que** l'au moins un partageur de sièges (40, 42) comporte au moins un endroit de raccordement (70) réalisé comme une échancrure, dans laquelle l'endroit de raccordement (64, 66) du mécanisme d'ajustement (44), qui est formé par le dossier (32), engrène par liaison de forme au moins dans la position d'usage.

7. Dispositif de siège d'aéronef selon l'une quelconque des revendications précédentes,
**caractérisé en ce que** le siège d'aéronef (10, 14, 16) comporte au moins un piètement de siège antérieur (20, 22), qui est configuré à être découplé d'un rail de guidage pour un transfert du siège d'aéronef (10, 14, 16) dans la position de rangement.

8. Dispositif de siège d'aéronef selon l'une quelconque des revendications précédentes,
**caractérisé en ce que** le siège d'aéronef (10, 14, 16) comporte au moins un piètement de siège arrière (24, 26), qui est configuré à être couplé avec un rail de guidage via au moins un endroit de raccordement.

9. Dispositif de siège d'aéronef au moins selon les revendications 2 et 8,
**caractérisé en ce que** dans une zone de raccordement-arrière tube-support du partageur de sièges (40, 42) le mécanisme d'ajustement (44) forme un endroit porteur (62) par le biais duquel le partageur de sièges (40, 42) est couplé avec le piètement de siège arrière (24, 26) d'une manière pivotable.

10. Dispositif de siège d'aéronef selon l'une quelconque des revendications précédentes,
**caractérisé par** au moins un siège d'aéronef de plus (14, 16) formant une rangée de sièges (12) avec le siège d'aéronef (10).

11. Dispositif de siège d'aéronef selon la revendication 10,
**caractérisé en ce que** les au moins deux sièges d'aéronef (10, 14, 16) d'une rangée de sièges (12) sont ajustables ensemble entre la position d'usage et la position de rangement.
